# EUROPEAN PATENT SPECIFICATION

(11) **EP 0 890 486 B1**
(45) Date of publication and mention of the grant of the patent: **07.11.2001**
(21) Application number: 98202815.1
(22) Date of filing: 04.08.1997
(51) Int. Cl.: B60R 16/02

(54) **Rotary connector attachment structure**
Befestigung eines elektrischen Drehschalters
Fixation pour connecteur rotatif

(30) Priority: 05.08.1996 JP 20604096; 02.09.1996 JP 23217496; 16.12.1996 JP 33565896
(43) Date of publication of application: 13.01.1999
(62) Divisional of application: 97305896.9
(73) Proprietor: ALPS ELECTRIC CO., LTD., Ota-ku Tokyo 145 (JP)
(72) Inventor: Kato, Hironori, Sendai-shi, Miyagi-ken (JP); Furuichi, Kimihiro, Furukawa-shi, Miyagi-ken (JP); Mitsuzuka, Katsuya, Tome-gun, Miyagi-ken (JP); Sano, Yukari, Toda-gun, Miyagi-ken (JP); Uchida, Katsutoshi, Shida-gun, Miyagi-ken (JP)
(74) Representative: Kensett, John Hinton

(56) References cited:
- EP-A- 0 482 234
- EP-A- 0 771 693
- WO-A-95/09744
- DE-A- 19 511 693
- FR-A- 2 568 421

## Description

This application is a divisional application, divided from application number 97305896.9.

The present application relates to an attachment structure for a rotary connector used as connecting means for electrically coupling electrical parts mounted on a steering wheel, eg an air bag inflator, to the body side, and a combination switch including various switch units, eg a headlight switch and a wiper switch, built therein. The present invention also relates to a steering unit provided with such an attachment structure.

Further, the present invention relates to a rotary connector used as connecting means for electrically coupling electrical parts mounted on a steering wheel, eg an air bag inflator and a horn switch, to the body side.

A rotary connector basically comprises a pair of housings coupled to each other in a relatively rotatable manner, and a flexible cable wound within an annular storage space defined between the pair or housings. The flexible cable has both conductor ends fixed to the respective housings and led out of the rotary connector, and connector terminals are attached to the led-out ends of the flexible cable. One of the housings serves as a movable housing and the other housing serves as a stationary housing. When the movable housing is rotated in one direction, ie clockwise or counterclockwise, the flexible cable is rolled up or unrolled in the storage space depending on the direction of rotation of the movable housing. The rotary connector having the above-explained construction is incorporated in a steering apparatus of an automotive vehicle and used as connecting means for electrically coupling the column side and the steering wheel side. On this occasion, the stationary housing of the rotary connector is required to be attached to a stator member on the column side.

As a conventional attachment structure for such a rotary connector, there has been employed the so-called steering unit constructed such that a combination switch including various switch units (called stalk switches), eg a headlight switch and a wiper switch, built therein is fixed onto the column side beforehand, and the stationary housing of the rotary connector is attached by screws or the like to a flat upper surface of a casing which serves an outer shell of the combination switch. In addition, the movable housing of the rotary connector is locked to the rear side of the steering wheel by using a joint pin or the like. The connector terminals provided at both the ends of the flexible cable are joined to respective external connectors provided on the combination switch and the steering wheel. With this structure, the movable housing is rotated in either direction, ie clockwise or counterclockwise, with turning operation of the steering wheel, while electrical parts mounted on the steering wheel, eg an air bag inflator and a horn switch, are always kept electrically connected to the column side through the flexible cable in the rotary connector.

Further, in some cases, both the ends of the flexible cable in the rotary connector are led out from both the housings through wire harnesses, and specific connectors attached to respective ends of the wire harnesses are joined to correspondingly connectors provided on the steering wheel and the combination switch. Additionally, in some cases, wire harnesses having specific connectors attached to their ends are also led out from the stalk switches, and the specific connectors are jointed to corresponding connectors provided on the combination switch are joined to corresponding connectors on the body side.

Meanwhile, the height dimension of a rotary connector greatly depends on the width dimension of a flexible cable used in the rotary connector. For example, when audio switches, etc are also mounted on a steering wheel in addition to the above-mentioned electrical parts such as the air bag inflator and the horn switch, the number of conductors of the flexible cable must be increased for connection of the increased number of electrical parts. This requires an increase in height dimension of a rotary connector. Also, there has been recently developed an automotive vehicle wherein the angle and direction through and in which a steering wheel is turned are detected by a steering sensor to carry out damping force control of a suspension, shift position control of an automatic transmission, etc based on a signal detected by the steering sensor. In the trial design of such a recent automotive vehicle, the steering sensor is assembled on a combination switch along with a rotary connector.

Details of known rotary connectors can be found in, for example, patent documents DE-A-19511693 and WO-A-95/09744. DE-A-19511693 discloses a rotary connector according to the preamble of claim 1.

However, a space between the combination switch and the steering wheel is restricted. Accordingly, if the above conventional structure of attaching the stationary housing of the rotary connector to the upper surface of the casing of the combination switch is employed, the rotary connector having a large height dimension could not be assembled in the space between the combination switch and the steering wheel. In particular, when the rotary connector and the steering sensor are both to be assembled in that space, the rotary connector is required to have a considerably lessened thickness. In other words, there is a problem that a rotary connector having a large number of conductors to be adaptable for an increased number of circuits cannot be assembled in the space.

Also, the above conventional attachment structure requires many wire harnesses for electrically connecting the rotary connector and the stalk switches to the body side, which results in problems of increasing the total weight of the steering unit and pushing up the production cost. Another problem is that when the stalk switches are repaired or replaced, repairing work is troublesome because the combination switch has to be disassembled after removing both the steering wheel and the rotary connector.

According to an aspect of the present invention, a rotary connector includes receivers provided on a stationary housing thereof and stalk switches constituting switch units are held by the receivers in a detachable manner. By providing the receivers for the stalk switches on the stationary housing itself of the rotary connector, an effective space in the axial direction of the steering shaft is essentially so enlarged that a rotary connector having a relatively large height dimension can be assembled alone or even along with another part, such as a steering sensor, in the steering apparatus. Also, the stalk switches can be easily repaired or replaced from either side of the rotary connector with no need of removing the steering wheel and the rotary connector.

The rotary connector comprises a movable housing and a stationary housing coupled to each other in a relatively rotatable manner. The stationary housing can be attached to the casing of the combination switch in any suitable position. But, by fixing attachment lugs provided on the stationary housing to the top plate of the casing around the opening, the top plate of the casing is mechanically reinforced in the vicinity of the opening by the provision of the rotary connector, and therefore the casing of the combination switch can be prevented from lowering its strength.

The switch units are preferably the so-called stalk switches such as a headlight switch and a wiper switch. By detachably attaching the switch units to the sides of the rotary connector, the stalk switches can be easily repaired or replaced with no need of removing the steering wheel and the rotary connector.

A rotary connector according to the present invention comprises a stationary housing with an outer tubular position, a movable housing coupled to the stationary housing in a relatively rotatable manner and having an inner tubular portion positioned to face the outer tubular portion with an annular storage space defined therebetween, and a flexible cable wound within the storage space and electrically led out to the exterior with both ends of the flexible cable fixed respectively to the outer tubular portion and the inner tubular portion, and switch units, characterised in that: said stationary housing being provided with receivers for detachably holding the stalk switches as switch units; a printed board is fixed to said stationary housing and connectors capable of being connected to said switch units upon fitting thereof to said receivers are mounted on said printed board.

The receivers may be attached as separate members to the stationary housing in a subsequent step, but they are preferably integrally formed with the stationary housing.

With this structure, an effective space in the axial direction of the steering shaft is essentially so enlarged that a rotary connector having a relatively large height dimension can be assembled alone or even along with another part, such as a steering sensor, in the steering apparatus. Also, the stalk switches can be easily repaired or replaced from either side of the rotary connector with no need of removing the steering wheel and the rotary connector.

In the above rotary connector, by fixing a printed board to the stationary housing and mounting connectors, which are capable of being connected to the stalk switches upon fitting thereof to the receivers, on the printed board, the stalk switches can be electrically connected to the rotary connector at the same time as when the stalk switches are mechanically coupled to the receivers.

Further, by providing a connector of one-piece united type on a bottom surface of the stationary housing for electrical connection of an outer end of the flexible cable and the stalk switches to an exterior connector on the body side through the connector of one-piece united type, the rotary connector can be electrically connected to the external connector through one point, and hence work of assembling the rotary connector can be simplified.

Embodiments of the present invention will now be described, by of example only, with reference to the accompanying drawings, in which:
Figure 1 is a perspective view of a rotary connector according to the invention, looking from the rear side of the rotary connector;
Figure 2 is a sectional view showing a state where stalk switches are mounted to the rotary connector shown in Figure 1; and
Figure 3 is a perspective view of the rotary connector and the stalk switches, shown in Figure 2, which are disassembled from each other.

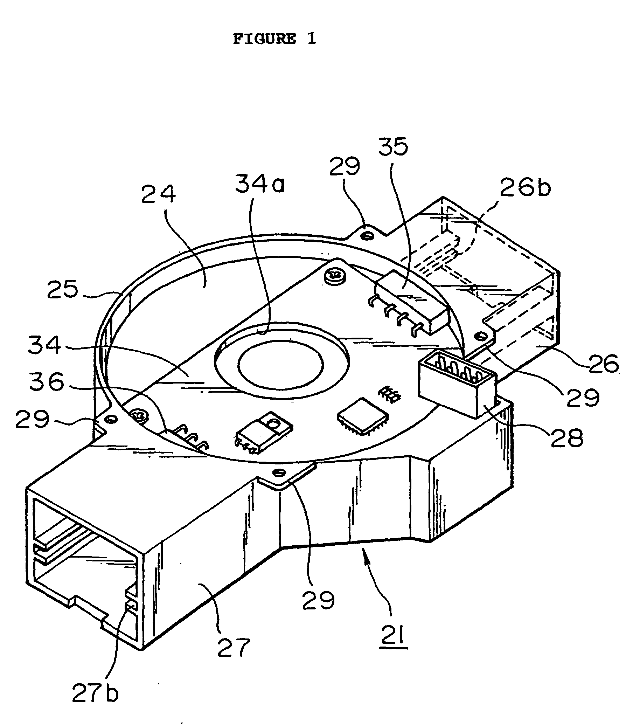

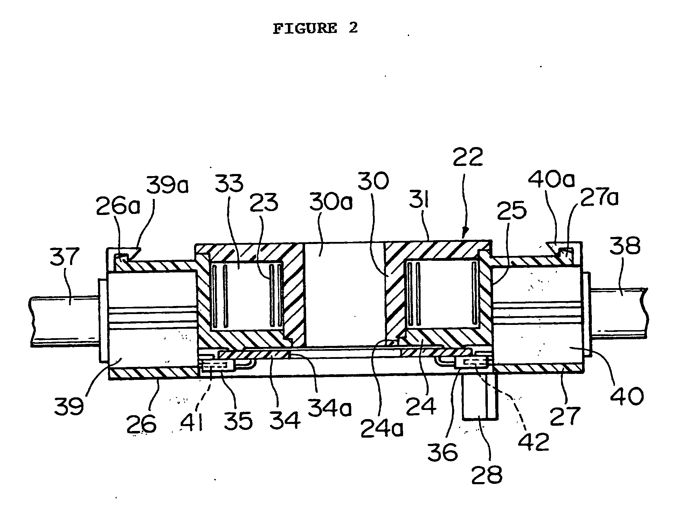

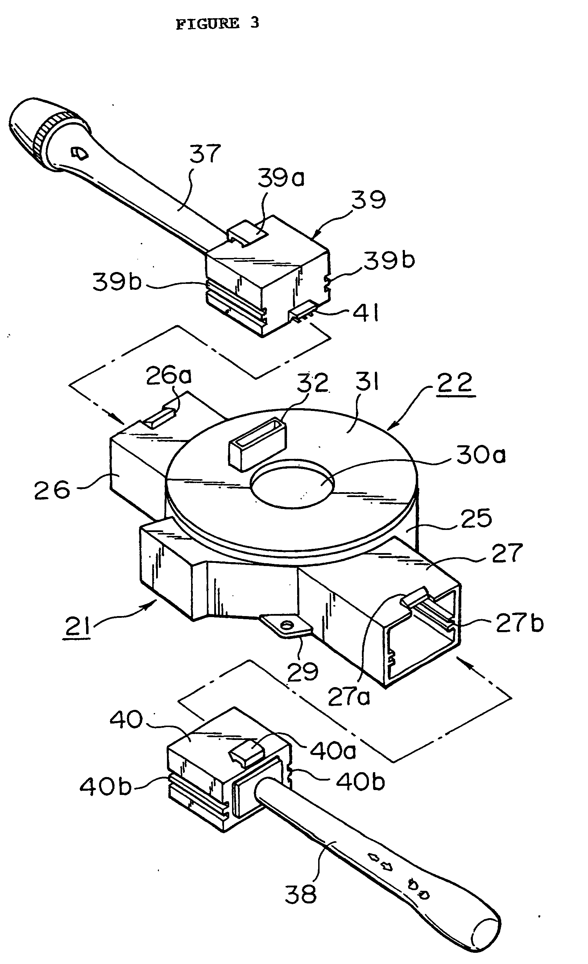

An embodiment will be described below with reference to the drawings. Figure 1 is a perspective view of a rotary connector looking from the rear side of the rotary connector, Figure 2 is a sectional view showing state where stalk switches as switch units are mounted to the rotary connector shown in Figure 1, and Figure 3 is a perspective view of the rotary connector and the stalk switches, shown in Figure 2, which are disassembled from each other. As shown in these drawings, the rotary connector of this embodiment basically comprises a stationary housing 21, a movable housing 22 rotatably coupled to the stationary housing 21, and a flexible cable 23 stored in both the housings 21, 22.

In this embodiment, the stationary housing 21 comprises a bottom plate 24 having a centre hole 24a formed therein, an outer tubular portion 25 vertically extending from an other circumferential edge of the bottom plate 24, and a pair of holder walls 26, 27 projecting laterally to the left and right from the other tubular portion 25. These components are integrally formed of resin by simultaneous molding. The holder walls 26, 27 serve as receivers for holding stalk switches described later, and are each in the form of a box being open at a side end opposite to the outer tubular portion 25. Also, the holder walls 26, 27 have latch projections 26a, 27a provided on respective upper surfaces thereof, and guide grooves 26b, 27b extending horizontally and formed in respective inner surfaces thereof. Further, a stationary side connector 28 of one-piece united type is attached to a lower end of the outer, tubular portion 25, and a plurality of attachment lugs 29 are formed at every joint comers between the lower end of the outer tubular portion 25 and bottom surfaces of the holder walls 26, 27.

On the other hand, the movable housing 22 comprises an inner tubular portion 30 having an insertion bore 30a formed therethrough, and a ring-shaped tope plate 31 extending radially outward from an upper end of the inner tubular portion 30. These components are also integrally formed of resin by simultaneous molding. A movable side connector 32 is provided on the top plate 31. The stationary housing 21 and the movable housing 22 are coupled to each other in a relatively rotatably manner through snap action or the like. An annular storage space 33 is defined by the bottom plate 24, the outer tubular portion 25, the inner tubular portion 30 and the top plate 31 of both the housings 21, 22. The flexible cable 23 is wound within the storage space 33 in the form of, eg a spiral. The flexible cable 23 is called a flat cable and has a plurality of conductors, though not shown, supported on a belt-like base film. An outer end of the flexible cable 23 is fixed to the outer tubular portion 25 and its conductors are connected to respective terminals of the stationary side connector 28. Also, an inner end of the flexible cable 23 is fixed to the inner tubular portion 30 and its conductors are connected to respective terminals of the movable side connector 32.

A printed board 34 is fixedly screwed to the bottom plate 24 of the stationary housing 21, and has a through hole 34a formed therein. A pair of connectors 35,36 and other circuit parts are mounted on the rear side of the printed board 34 and wired to the remaining terminals of the stationary side connector 28. The connectors 35, 36 are located to face the interiors of the holder walls 26, 27, respectively.

Stalk switches 37, 38 are lever-like switch units with a headlight switch and a wiper switch built therein, and have respective base portions 39,40 each in the form of a rectangular pillar. The base portions 39, 40 have lock claws 39a, 40a formed on their upper surfaces, and guide ridges 39b, 40b formed on their both side surfaces, respectively. In addition, connector pins 41, 42 are projected on respective front surfaces of the base portions 39, 40. One stalk switch 37 is detachably attached to the holder wall 26 on the left side. More specifically, when the guide ridges 39b of the stalk switch 37 are inserted into the holder wall 26 while engaging in and sliding along the guide grooves 26b, the lock claw 39a is snapped in place after riding over the latch projection 26a, whereby the base portion39 is fixed in the holder wall 26. On this occasion, the connector pins 41 are jointed to the connector 35 of the printed board 34 and the stalk switch 37 is electrically connected to the stationary side connector 28 through the connector 35. Likewise, the other stalk switch 37 is detachably attached to the holder wall 27 on the right side. More specifically, when the guide ridges 40b of the outer stalk switch 38 are inserted into the holder wall 27 while engaging in and sliding along the guide grooves 27b, the lock claw 40a is snapped in place after riding over the latch projection 27a, whereby the base portion 40 is fixed in the holder wall 27. On this occasion, the connector pins 42 are jointed to the connector 36 of the printed board 34 and the stalk switch 38 is electrically connected to the stationary side connector 28 through the connector 36.

The rotary connector having the above construction is assembled in a steering apparatus as follows. First, the through holes 34a of the printed board 34 and the insertion bore 30a of the movable housing 22 are fitted over the steering shaft (not shown) and the attachment lugs 29 on the stationary housing 21 are fixed screwed to an attachment member, eg the column cover. At this time, if an external connector (not shown) of direct coupling type is provided on the attachment member, the stationary side connector 28 can be jointed to the external connector at the same time as when the stationary housing 21 is fixedly attached in place. As an alternative, an external connector with lead wires may be employed for implementing work of attaching the stationary housing 21 and work of jointing it to the external connector separately from each other. After that, the steering wheel (not shown) is fixed to the steering shaft. At this time, the rear side of the steering wheel is locked to the top plate 31 of the movable housing 22 with a joint pin or the like, and an external connector (not shown) provided on the steering wheel is jointed to the movable side connector 32. As a result, electrical parts mounted on the steering wheel, such as an air bag inflator,are electrically connected to a controller (not shown) provided on the body side through the movable side connector 32, the flexible cable 23 and the stationary side connector 28.

Then the stalk switches 37, 38 are inserted into the corresponding holder walls 26, 27, respectively, such that the stalk switches 37, 38 are mechanically coupled to the holder walls 26, 27 and their connector pins 41, 42 are electrically connected to the connectors 35, 36. As a result, the stalk switches 37, 38 are electrically connected to the controller (not shown) provided on the body side through the connectors 35, 36 and the stationary side connector 28. Note that while the stalk switches 37, 38 have been described above as being fitted to the holder walls 26, 27 after the rotary connector is assembled in the steering apparatus, but the work of fitting the stalk switches maybe carried out before the rotary connector is assembled in the steering apparatus.

In operation, when the steering wheel is turned clockwise or counterclockwise, resultant rotating force is transmitted to the movable housing 22, whereupon the movable housing 22 is rotated in the same direction as the steering wheel. For example, when the steering wheel is turned counterclockwise from its neutral position, the movable housing 22 is also rotated counterclockwise correspondingly and the flexible cable 23 is rolled up around an outer circumferential surface of the inner tubular portion 30. On the contrary, when the steering wheel is turned clockwise from its neutral position, the movable housing 22 is also rotated clockwise correspondingly and the flexible cable 23 is unrolled along an inner circumferential surface of the outer tubular portion 25. In any state, electrical connection between the steering wheel and the body side is maintained through the flexible cable 23, and electrical connection between the stalk switches 37, 38 and the body side is also maintained.

With the embodiment described above, since the holder walls 26, 27 serving as receivers for holding the stalk switches 37, 38 are provided on the stationary housing 21 of the rotary connector and arranged to extend substantially radially outward of the storage space 33 storing the flexible cable 23, it is possible to prevent an increase in total height dimension of the rotary connector including a combination of both the stationary housing 21 and the stalk switches 37, 38 (ie in dimension of the rotary connector in the axial direction of the steering shaft). Therefore, even when the height dimension of the rotary connector is increased to be adaptable for a larger number of circuits, or even when another part such as a steering sensor is integrally provided on the rotary connector, the rotary connector can be assembled in a limited spaced below the steering wheel.

Further, since the stalk switches 37, 38 are detachably attached to the holder walls 26, 27, the stalk switches 37, 38 can be easily repaired or replaced from either side of the rotary connector when required, with no need of removing the steering wheel and the rotary connector.

Since the printed board 34 is fixed to the stationary housing 21 and the connectors 35, 36 capable of being connected to the stalk switches 37, 38 upon fitting thereof to the holder walls 26, 27 are mounted on the printed board 34, the stalk switches 37, 38 can be electrically connected to the rotary connector at the same time as when the stalk switches 37, 38 are mechanically coupled to the holder walls 26, 27.

Additionally, since the stationary side connector 28 of one-piece united type is provided on the bottom surface of the stationary housing 21 and the outer end of the flexible cable 23 and the connectors 35, 36 on the printed board 34 are wired to the stationary side connector 28, the rotary connector can be electrically connected to the external connector on the body side through one point, ie the stationary side connector 28, even though the stalk switches 37, 38 are fitted to the rotary connector. It is thus possible to simplify work of assembling the rotary connector.

While the above embodiment has been described as providing the stationary side connector 28 of one-piece united type on the bottom surface of the stationary housing 21, a stationary side connector for jointing the outer end of the flexible cable 23 to the external connector and a stationary side connector for jointing the stalk switches 37, 38 to the external connector may be provided separately from each other.

## Claims

1. A rotary connector comprising a stationary housing (21) with an outer tubular portion (25), a movable housing (22) coupled to said stationary housing in a relatively rotatable manner and having an inner tubular portion (30) positioned to face said outer tubular portion with an annular storage space (33) defined therebetween, a flexible cable (23) wound within said storage space and electrically led out to the exterior with both ends of said flexible cable fixed respectively to the outer tubular portion and the inner tubular portion, and switch units (37,38), **characterised in that**:
said stationary housing is provided with receivers (26,27) for detachably holding the switch units; a printed board (34) is fixed to said stationary housing and connectors (35,36) capable of being connected to said switch units upon fitting thereof to said receivers are mounted on said printed board.

2. A rotary connector as claimed in claim 1, further **characterised in that** a connector (28) of one-piece united type is provided on a bottom surface of said stationary housing (21) for electrically connecting an outer end of said flexible cable and said switch units (37,38) to an exterior connector on the body side through said connector of one-piece united type.

## Patentansprüche

1. Drehverbindungsstück, aufweisend: Ein stationäres Gehäuse (21) mit einem äußeren rohrförmigen Abschnitt (25), ein bewegliches Gehäuse (22), welches mit dem stationären Gehäuse in einer relativ dazu drehbaren Weise verbunden ist und einen inneren rohrförmigen Abschnitt (30) aufweist, der so positioniert ist, daß er dem äußeren rohrförmigen Abschnitt zugewandt ist und ein ringförmiger Unterbringungsraum (33) zwischen diesen definiert wird, ein flexibles Kabel (23), das im Unterbringungsraum aufgewickelt ist und elektrisch nach außen herausgeführt ist, wobei beide Enden des flexiblen Kabels jeweils am äußeren rohrförmigen Abschnitt und dem inneren rohrförmigen Abschnitt befestigt sind, und Schaltereinheiten (37, 38), **dadurch gekennzeichnet, daß**:
das stationärseitige Gehäuse mit Aufnahmestücken (26, 27) versehen ist, welche die Schaltereinheiten abnehmbar haltern; eine Leiterplatte (34) am stationären Gehäuse befestigt ist und Verbindungsstücke (35, 36), die in der Lage sind, mit den Schaltereinheiten bei deren Einbau in die Aufnahmestücke verbunden zu werden, an der Leiterplatte befestigt sind.

2. Drehverbindungsstück nach Anspruch 1, welches weiter **dadurch gekennzeichnet ist, daß** ein Verbindungsstück (28) vom einstückigen Typ auf der Unterseite des stationären Gehäuses (21) vorgesehen ist, um ein äußeres Ende des flexiblen Kabels und die Schaltereinheiten (37, 38) mit einem karrosserieseitigen externen Verbindungsstück mittels des Verbindungsstücks vom einstückigen Typ elektrisch zu verbinden.

## Revendications

1. Un connecteur rotatif comprenant un carter stationnaire (21) avec une portion extérieure tubulaire (25), un carter amovible (22) accouplé au carter stationnaire d'une manière permettant une rotation relative, et ayant une portion intérieure tubulaire (30) placée de manière à faire face à la portion tubulaire extérieure avec un espace annulaire d'emmagasinage (33) prévu entre les deux, un câble flexible (23) lové dans cet espace d'emmagasinage et conduit électriquement vers l'extérieur, les deux extrémités du câble étant fixées respectivement à la portion tubulaire extérieure et la portion tubulaire intérieure, et des éléments commutateurs (37,38), **caractérisé par le fait que :**
le carter stationnaire est pourvu de récepteurs (26, 27) pour maintenir les éléments commutateurs de façon détachable ; un panneau imprimé (34) est fixé au carter stationnaire et des connecteurs, (35,36) pouvant être connectés aux éléments commutateurs lorsque ceux-ci sont ajustés sur les récepteurs, sont montés sur le panneau imprimé.

2. Un connecteur rotatif selon la revendication 1, **caractérisé** de surcroît **par le fait** qu'un connecteur (28) de type monobloc est prévu sur la surface de fond du carter stationnaire (21) pour connecter électriquement une extrémité extérieure du câble flexible ainsi que les éléments commutateurs (37,38) à un connecteur extérieur du côté du châssis par l'intermédiaire du connecteur monobloc.
